# EUROPEAN PATENT APPLICATION

(11) **EP 4 657 065 A1**
(43) Date of publication of application: **03.12.2025**
(21) Application number: 25179735.3
(22) Date of filing: 29.05.2025
(51) Int. Cl.: G01N 30/86, G01N 30/72

(54) **REAL-TIME CHROMATOGRAPHY DATA FILTER FOR SCANS WITH NON-UNIFORM DATA INTERVALS**

(30) Priority: 31.05.2024 US 202463654877 P
(71) Applicant: Thermo Finnigan LLC, San Jose, CA 95134 (US)
(72) Inventor: LIU, Yi, Bellevue (US); SONG, Qingyu, Fremont (US)
(74) Representative: Boult Wade Tennant LLP

(57) **Abstract**

Systems and methods taught herein enable improved filtering of chromatography data acquired during a series of scans with non-uniform data sampling intervals (also referred to herein as "scan durations") by use of a chromatography data filter that operates on a time base that is shorter than any of the data sampling intervals in the series of scans. By employing a filter with such a time base, the systems and methods taught herein improve the signal-to-noise ratio (S/N) of the resulting data and enhance the quality of chromatograms in mass spectrometry real-time signal processing, leading to clearer signals, reduced baseline noise, and smoother peaks in the chromatographic data.

## Description

### BACKGROUND

One way to improve sensitivity in liquid chromatography-mass spectrometry (LC-MS) scans is to reduce noise level in the chromatogram. Since noise is high frequency in nature (compared to chromatographic peaks), it can be removed from the chromatographic profile by frequency-dependent filtration.

### SUMMARY

In one aspect, a method for processing data obtained from scans with non-uniform data sampling intervals to form a chromatogram is taught herein. The method includes obtaining a plurality of data points corresponding to a plurality of scans during elution of a sample from an inlet system. Each scan in the plurality of scans occurs for a corresponding data sampling interval. The method further includes applying a chromatographic data filter to at least some of the plurality of data points. The filter includes a time base, and the time base is smaller than any of the corresponding data sampling intervals. A non-transitory computer readable medium containing instructions for a computer to execute this method are also taught herein.

In one aspect, a method for processing data obtained from scans with non-uniform data sampling intervals to form a chromatogram is taught herein. The method includes obtaining a plurality of data points corresponding to a plurality of scans during elution of a sample from an inlet system. Each scan in the plurality of scans occurs for a corresponding data sampling interval. The method also includes measuring at least one corresponding data sampling interval. The method also includes dividing the at least one corresponding data sampling interval by an interpolation factor to determine a time base of a chromatographic data filter. The method also includes calculating filter coefficients of the chromatographic data filter based on the time base. The method also includes applying the chromatographic data filter to at least some of the plurality of data points. A non-transitory computer readable medium containing instructions for a computer to execute this method are also taught herein.

### BRIEF DESCRIPTION OF THE SEVERAL VIEWS OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements. To easily identify the discussion of any particular element or act, the most significant digit or digits in a reference number refer to the figure number in which that element is first introduced.
FIG. 1 illustrates the application of conventional filters and filters as taught herein to experimental data obtained during the time that a sample is entering a mass spectrometer.
FIG. 2 illustrates an example chromatographic data filter in a network formulation that converts raw chromatographic data into filtered chromatographic data.
FIG. 3A illustrates two plots of raw data for different m/z ranges over the same time span from scans that are spaced at non-uniform data sampling intervals.
FIG. 3B shows the raw data of FIG. 3A obtained at non-uniform data sampling intervals as filtered using a conventional static filter.
FIG. 3C shows the raw data of FIG. 3A obtained at non-uniform data sampling intervals as filtered by the chromatographic data filter in accordance with examples taught herein.
FIG. 4 illustrates a time shift between raw and filtered peaks according to some embodiments of the chromatographic data filter taught herein.
FIG. 5 illustrates an example method for processing data obtained from scans with non-uniform data sampling intervals to form a chromatogram.
FIG. 6 illustrates an additional example method for processing data obtained from scans with non-uniform data sampling intervals to form a chromatogram.
FIG. 7 illustrates a computing device that is suitable for control of a mass spectrometer and for execution of computer-readable instructions to perform methods described herein.

### DETAILED DESCRIPTION

Systems and methods taught herein enable improved filtering of chromatography data acquired during a series of scans with non-uniform data sampling intervals (also sometimes referred to herein as "scan durations") by use of a chromatography data filter that operates on a time base that is shorter than any of the data sampling intervals in the series of scans. Conventionally, mass spectrometer data acquisition systems can use low-pass filters to reduce or eliminate high-frequency noise and enhance signals for chromatographs. The conventional chromatography data filter operates on a time base that is equal to the uniform data sampling interval. When such a conventional chromatography data filter is used to filter data obtained with a varying (e.g., non-uniform) data sampling interval, the filter response can introduce irregularities that make the resulting data unstable and unpredictable. The systems and methods taught herein employ a chromatography data filter that operates on a time base that is shorter than the shortest data sampling interval in a given series of scans. By employing a filter with such a short time base, the systems and methods taught herein improve the signal-to-noise ratio (S/N) of the resulting data and enhance the quality of chromatograms in mass spectrometry real-time signal processing, leading to clearer signals, reduced baseline noise, and smoother peaks in the chromatographic data as well as strongly improved stability as compared to the same data processed using the conventional static filter.

The filtering can be performed in real-time during acquisition of the chromatogram based upon initial parameters provided by a user or based upon a determination of initial conditions during initial acquisition of chromatography data.

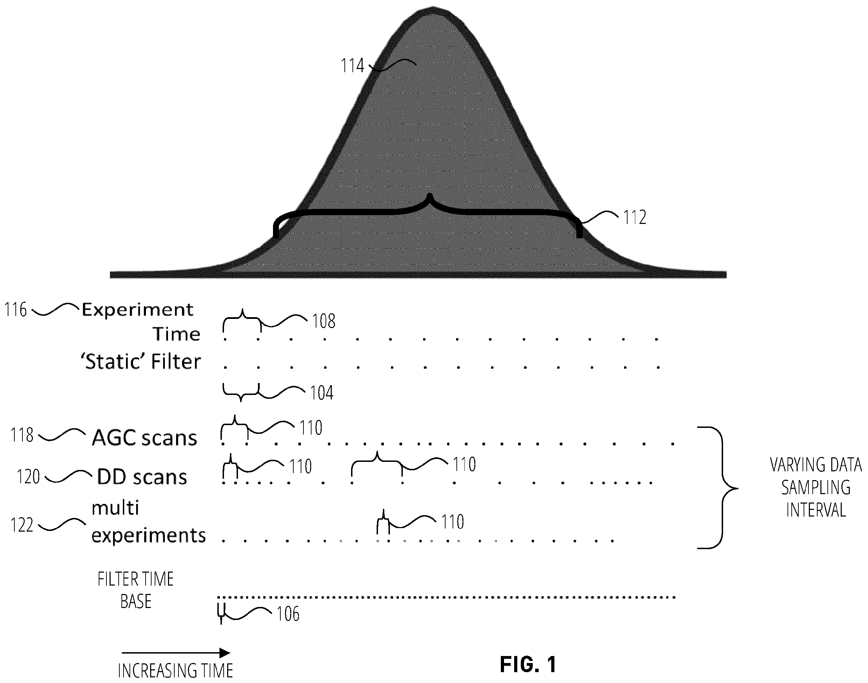

FIG. 1 illustrates the application of conventional filters and filters as taught herein to experimental data obtained during the time that a sample is eluting from an inlet system and entering a mass spectrometer. Examples of inlet systems compatible with the present systems and methods include chromatographic columns, batch inlet systems, direct probe inlets, or electrophoresis capillary inlet systems. The introduction of the sample into the mass spectrometer is illustrated by an elution peak 114 having a peak width 112. During the peak width 112 of the elution peak 114, a number of scans can be performed that each take a specified time to perform. As used herein, a "data sampling interval" is the time between receiving data from adjacent scans of the same scan type within an experimental method. Traditionally, a series of scans 116 (e.g., MS1 scans) were performed at a periodic data interval 108 (i.e., data was obtained from scans at a regular interval) that did not vary during the time that analytes in the elution peak 114 were eluting into the mass spectrometer. The resulting data from the series of scans was filtered using a conventional static chromatographic filter having a constant time base 104 that matched the periodic data interval 108 of the scans.

As technology has advanced, new experimental methodologies and scheduling strategies have been introduced that allow for non-uniform (i.e., non-periodic, random, or aperiodic) data sampling intervals. A user can define a data acquisition method using, for example, a method editor for a mass spectrometer. A particular method can include a number of scans that each have a corresponding scan type (e.g., scans can be all of the same type or of different types within the method) and a schedule (e.g., a user-defined time window). Scans of different types or of the same time can take different amounts of time to complete depending upon the goals to be achieved with that scan. For example, some scans can cover a larger range of m/z values and thus can take longer to complete than targeted scans over a narrow m/z window. Other scans might employ automatic gain control where the time for accumulation of ions before completion of the scan is different for different targeted ions. In addition, a mixture of different scan types can be performed over a single elution peak 114, and each of these different scan types can have a different associated time for the scan to complete and provide output data. Furthermore, schedules for different scans can overlap, so the sampling rates for specific scan types can be non-uniform or inconsistent between scans. The chromatography data filter taught herein operates on a time base 106 that is shorter than the shortest data sampling interval in the sequence of scans to ensure that data from each scan is sampled correctly and incorporated correctly into the filter.

In various examples, scans that produce chromatography data that can be processed using the chromatography data filters taught herein can include full scan MS1 data acquisition (either hybrid or quantitative), adaptive gain control (AGC), selective reaction monitoring (SRM), selected ion monitoring (SIM), tandem mass analyses such as MS2, MS3, up to MSn, data independent acquisition (DIA), product ion scans, neutral loss scans, data dependent acquisitions (DDA) including full scans, adaptive retention time (RT) methods, or any combination of these scan types within one method. In some examples, the chromatographic data filter applied to the data obtained using one scan type can be different (e.g., can be user-specified to be different) from the chromatographic data filter applied to data obtained using a different scan type. In some embodiments, the data that is obtained at the data sampling interval 110 can include, for example, a peak intensity for one or more particular analytes or all measured analytes at a given value of m/z as measured during the scan. These data can be acquired from multiple scans over time and assembled into a chromatogram (e.g., abundance or intensity as measured by detector response over time).

For example, FIG. 1 illustrates time points for a series of overlapping scans including automatic gain control or AGC scans 118, data dependent or DD scans 120, and multi-experiment scans 122. In AGC scans, the mass spectrometer can adjust experimental conditions to increase or decrease the number of ions obtained in a given m/z range based, for example, on feedback from a detector. This can be accomplished, for example, by applying various injection times based on the intensity of the signal. Thus, the data sampling interval 110 for scans in the series of AGC scans 118 can change from relatively longer times between scans to shorter times. Similarly, FIG. 1 illustrates a series of data dependent scans, also called DD scans 120. In data dependent scans, a mixture of survey scans and targeted m/z scans can be performed wherein the different scans can take different data sampling intervals 110 to complete that can depend upon the intensity of the signal. Finally, FIG. 1 illustrates a sequence of multi-experiment scans 122 wherein a mixture of different scan types is used. In some cases, scans in multi-experiment scans 122 may overlap in time. For example, one scan type can be interrupted to perform a different scan type where data is obtained. Then, the experiment reverts back to the initial scan type for the remainder of the planned period. In some multi-experiment scans 122, scans can be added or expired (removed) throughout the elution time according to predefined windows. The different scan types can all return data at different rates within a single scan type or as different scan experiments complete.

On sequences of scans with varying data sampling intervals 110, the conventional filter that utilizes a constant time base 104 matched to a static or initial periodic data interval 108 will produce unreliable and unpredictable results. The chromatographic data filter taught herein can use the time base 106 that is shorter than the shortest data sampling interval 110 in the sequence of scans. For example, the graphical representation of the time base 106 shows that the filter samples data at a rate faster (i.e., closer time points due to smaller time base) than the fastest scan acquisition or sampling rate (i.e., closest data sampling interval 110 points) in any of the AGC scans 118, DD scans 120, or multi-experiment scans 122. The chromatographic data filter advantageously reduces baseline noise, creates smoother peaks, improves repeatability (e.g., avoiding shifting or peak-shape changes during repeated scans), and enhances the clarity of signals in these scans.

In some examples, the time base 106 operates by applying interpolation to ensure sufficient sampling into the filter. The time base 106 can be a fine, constant time interval that enhances the stability and performance of the filter. In other embodiments, the time base 106 can be varied during the time of the elution peak 114. For example, in response to modification of a method in real-time to introduce a new, faster scan type, the time base 106 for the chromatographic data filter can be reduced to remain smaller than the smallest data sampling interval 110 in the revised experiment.

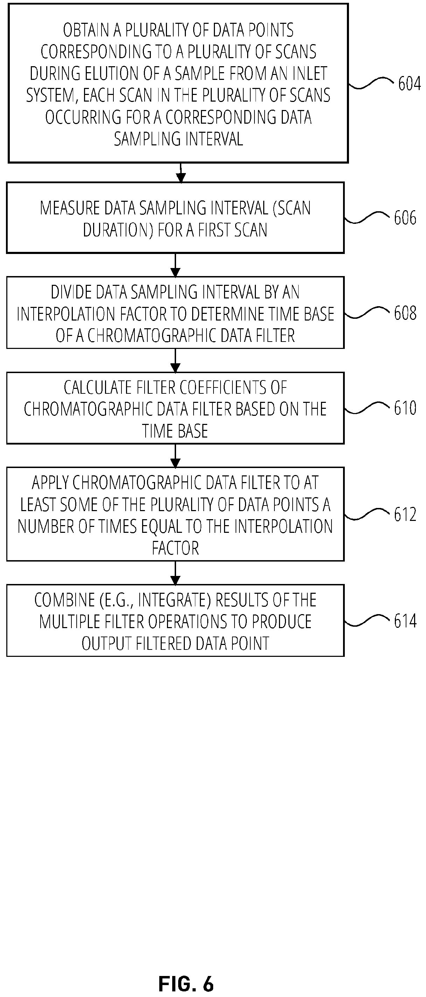

As described in greater detail below with respect to FIG. 6, the chromatographic data filter can be initialized with input parameters derived from a user, stored in memory, or derived in real-time from analysis of raw data produced by the mass spectrometer. In some examples, the time base 106 is determined in real-time by analyzing data from the mass spectrometer. For example, a computing device in communication with the mass spectrometer can receive two raw data points from two scans. The computing device can determine the time difference between receipt of these two data points, which corresponds to the data sampling interval 110 for the first scan. The computing device can then divide the determined data sampling interval 110 by an interpolation factor (e.g., an integer) to determine the time base 106. The interpolation factor can be selected to balance competing factors. For example, a larger interpolation factor divides the data sampling interval 110 into smaller segments and increases the smoothness of the resulting filter. At the same time, computational overhead increases. In various examples, the interpolation factor is an integer in a range from 2 to 20, in a range from 2 to 10, or equal to five. In some examples, the interpolation factor is not an integer and can take values such as 1.5. In some examples, the interpolation factor is in a range from 1.5-1000, in a range from 1.5 to 500, in a range from 1.5-100, or in a range from 1.5 to 50.

In some implementations, the time base 106 determined from the initial scans in a series of scans can be applied in the chromatographic data filter for all scans for the given elution peak 114. However, some sequences of multi-experiment scans 122 can incorporate dynamic addition or expiration of scans that can reduce the data sampling interval 110 to a level where it becomes comparable to the existing time base 106 that was initially determined by measurement of initial scans. In some examples, the computing system can monitor data sampling intervals 110 and take action to adjust future data sampling intervals 110 to be longer and/or adjust the time base 106 to be shorter such that the time base 106 does not become larger than dynamically updated data sampling intervals 110 during a series of scans.

In some examples, the full series of scans and associated data sampling intervals 110 is prescribed (for example, in a method editor) before analytes begin to elute into the mass spectrometer. The prescribed scans may be stored in a list or database, for example. As an alternative or addition to real-time measurement of data sampling intervals 110 as described above, the computing device configured to execute the chromatographic data filter can, in some examples, review the prescribed scans to determine or predict the shortest data sampling interval 110 in the series of scans. The computing device can then determine the time base 106 for the chromatographic data filter by dividing the shortest data sampling interval 110 by an interpolation factor (e.g., integer) as described above.

By increasing the sampling rate (i.e., increasing the interpolation factor or reducing the time base 106) of the chromatographic data filter, additional data operations will be performed per unit time. As the time base 106 decreases, peak shapes can improve while, at the same time, computational overhead can increase. As such, some implementations of the chromatographic data filter can take into account the available computing resources (i.e., processing power, available memory, and/or input/output speed) when determining the appropriate time base 106 for the filter. In some examples, the computing device can select the time base 106 to balance between data quality and available computing resources.

There are several reasons why the chromatographic data filter taught herein can outperform the conventional data filter operating at a constant time base 104 when applied to data obtained from scans with non-uniform data sampling intervals.

Non-constant scan duration: In mass spectrometry, there are scans with non-constant scan durations. For example, in scans involving automatic gain control (AGC) or data-dependent (DD) scans, the scan times vary based on the intensity of the signal. Similarly, multiple scan events with scan windows or overlapped scans in a method can result in varying scan durations. The classic IIR filter, which relies on a constant time base, may not effectively handle these variations.

Irregularities in filter response: The conventional filter assumes a constant time interval between two sampled data points. When the time intervals between samples are not consistent, it can introduce irregularities in the filter response. This can lead to unstable or unpredictable behavior, resulting in suboptimal noise reduction and signal smoothing.

Limited adaptability: The conventional filter has limited adaptability to handle dynamic changes in the data. In mass spectrometry, where the signal characteristics can vary significantly, the filter may not effectively adapt to the changing conditions, leading to reduced performance.

The chromatographic data filter taught herein addresses some of these problems by applying interpolation in sampling to inform filter parameters of the chromatographic data filter. By doing so, the chromatographic data filter can utilize a fine time base even in the presence of non-constant or non-uniform scan durations. The use of a fine time base to accomplish interpolation enhances the stability and performance of the filter, allowing it to effectively handle mass spectrometry scans with varying time intervals between data points, while maintaining the filter strength.

Examples have been taught herein above that utilize the chromatographic data filter to filter raw data in real-time (i.e., data from scans within a series of scans is filtered while additional scans in the series of scans are still being conducted). However, it is contemplated that the chromatographic data filter taught herein can also be applied in a post-processing step to data that has already been acquired after the completion of all scans in an experiment.

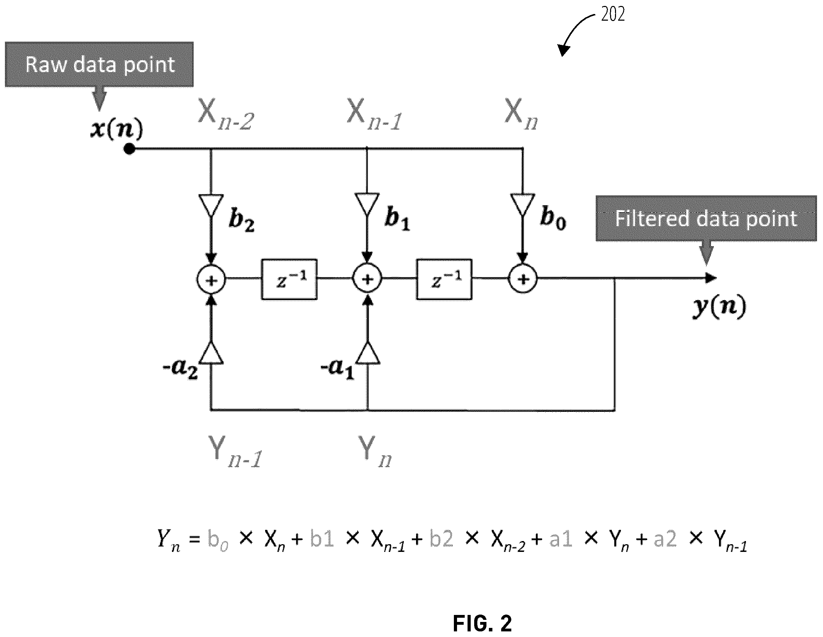

FIG. 2 illustrates a chromatographic data filter 202 taught herein in a network representation that converts raw chromatographic data into filtered chromatographic data. Chromatographic data filters can be defined or determined according to filter parameters, which can include, without limitation, filter coefficients and filter bandwidth. The chromatographic data filter 202 is an example of a second-order infinite impulse response (IIR) filter. The chromatographic data filter 202 as illustrated acts as a type of low pass filter that can effectively remove high-frequency baseline noise and smooth out data jitter across chromatographic peaks. In some examples, the chromatographic data filter 202 can improve overall performance by a factor of at least two. The chromatographic data filter 202 can be a feedback or recursive filter. A transfer function for the chromatographic data filter 202 can be described as Yₙ = b*₀* × X*ₙ* + b₁ × X*ₙ₋₁* + b₂ × X_{*n*-2} + a₁ × Y*ₙ* + a₂ × *Yₙ₋₁* wherein the filter coefficients b₀...bᵢ and a₀...aᵢ can define cutoff frequencies according to the relationship of *f*_{cutoff}= 0.5 x time base ÷ bandwidth. The bandwidth filter parameter can be a user-specified parameter or can be determined based upon the peak width 112. In some examples, the bandwidth can equal the peak width ÷ 4.

The chromatographic data filter taught herein can use low-pass filters to eliminate high-frequency noise. These filters, which can be implemented with either analog components, digital components, or a combination of both analog and digital components, operate both in the time domain corresponding to the mass-to-charge ratio of the acquired spectrum and in the chromatographic time domain. The multi-dimensional filter thus eliminates high frequency noise in chromatographic peak profiles that are not related to the real analytical signal. The filter can be applied to the ion signal in real time as the data is acquired. Signal-to-noise improvements can range from 2X to 5X. In addition, peak integration is more reliable, providing improved limits-of-quantitation, and assay linearity is not affected.

In some examples, the chromatographic data filter taught herein can be implemented by instructions (e.g., stored in non-transitive computer readable media) executed by a computing device in communication with, or that is a part of, a chromatography and mass spectrometer system. For example, the instructions can be executed by a digital signal processor (DSP) inside the mass spectrometer system. The chromatographic data filter can be applied to the data (e.g., ion signal) in real time. Some parameters can be specified by the user such as the expected baseline width of chromatographic peaks in the assay. The computing device, DSP, or other processor can calculate the appropriate bandwidths based upon input peak widths and apply them to the data.

In some examples, the bandwidth parameter is set by the user or by the computing system based on inspection of actual chromatographic data in the analysis (e.g., actual raw data acquired in the same series of scans or a previously obtained series of scans). If the bandwidth is set too low, high-frequency noise may reappear in the baseline and peak profiles. In the extreme case, the filter can have little to no effect, and the filtered signal can look the same as if the filter were turned off. If the bandwidth parameter is set too high, the chromatographic peak profile may be noticeably broadened (i.e., the peak can become shorter and fatter). Note that the peak area is still correct even when the bandwidth parameter is set too high.

In some implementations, the actual peak width 112 may deviate significantly from the expected bandwidth setting (i.e., the bandwidth filter parameter determined from inspection of prior data or provided by a user) without adversely impacting the quality of the results. As noted, longer bandwidths can cause the peak to broaden and reduce the height, but the peak area can be preserved. In some examples, a user can set the bandwidth to the highest value that does not cause significant peak broadening.

If some of the chromatographic peaks in the assay have significantly different peak shape characteristics (i.e., broad, tailing, etc.), the system can adjust the bandwidth parameter using a procedure with time windows. If a chromatographic peak begins to tail significantly in the later runs of an analysis, such as when the chromatographic column or other inlet system begins to degrade, the filter bandwidth may need to be updated or changed. In this case, the S/N ratio may be reduced and automated peak integration may miss part of the peak or integrate unrelated baseline noise. To avoid this effect, systems and methods taught herein can monitor peak shape and automatedly adjust the bandwidth parameter or notify a user that the user should update the bandwidth parameter if changes in the peak shape are identified.

In some systems, a computing device associated with the mass spectrometer can obtain input from a user to define filter parameters for the chromatographic data filter such as bandwidth. This can be done, for example, through a graphical user interface of the mass spectrometer. In some examples, the user can define different bandwidths to be used for different subsets of scans in a series of scans.

The chromatographic data filter 202 in FIG. 2 is illustrated in a network formulation as a convenient example, but other forms of data filtering using time bases smaller than the smallest data sampling intervals are also contemplated within the present disclosure.

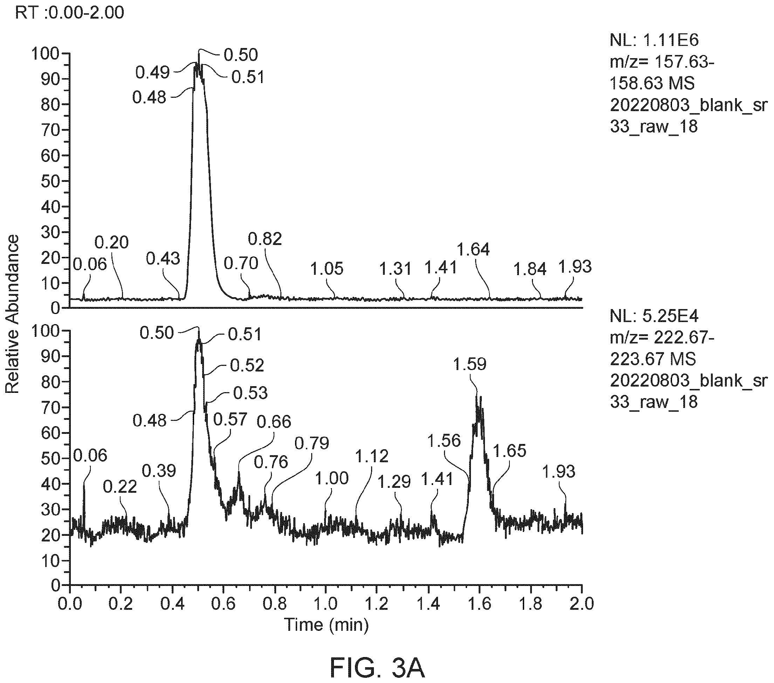

FIG. 3A illustrates two plots of raw data for different m/z ranges over the same time span from scans that are spaced at non-uniform data sampling intervals. The raw data includes significant jitter and fluctuations due to factors such as ion statistical noise caused by low ion signal.

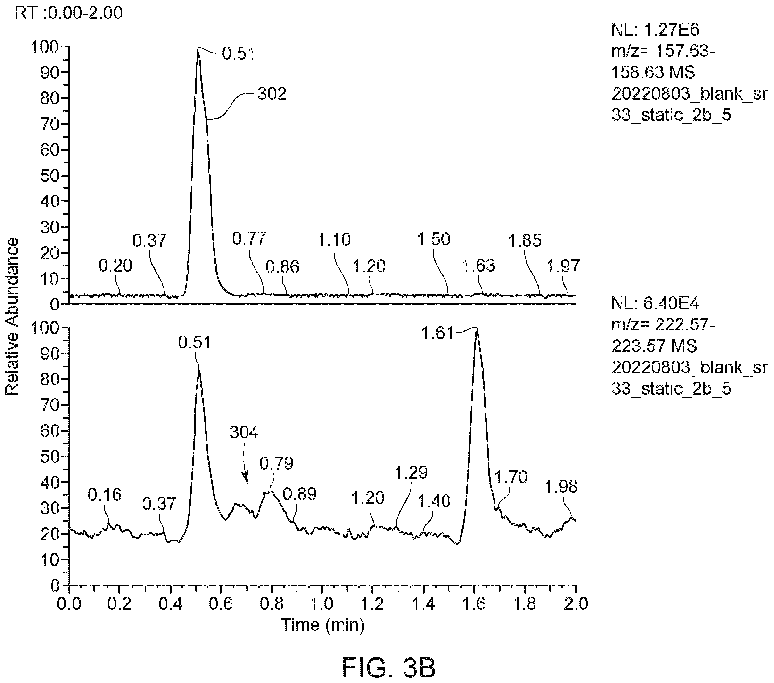

FIG. 3B shows the raw data of FIG. 3A obtained at non-uniform data sampling intervals as filtered using a conventional static filter. The resulting peaks are unstable and can include artifacts such as shoulder 302. Because the constant time base 104 of the conventional static filter can be longer than the data sampling intervals, multiple scans can occur within a sampling period of the filter or, potentially, no scans can occur within a sampling period. This situation can lead to mistaken amplification or reduction of the influence of the past data points in the operation of the filter that can shift unpredictably as a function of the proximity of the data point to the filter sampling time point. An example of this erroneous behavior is seen in the inversion 304 in FIG. 3B wherein the relative intensities of two peaks around 0.66 minutes and 0.76 minutes in the raw data of FIG. 3A is mistakenly inverted in FIG. 3B.

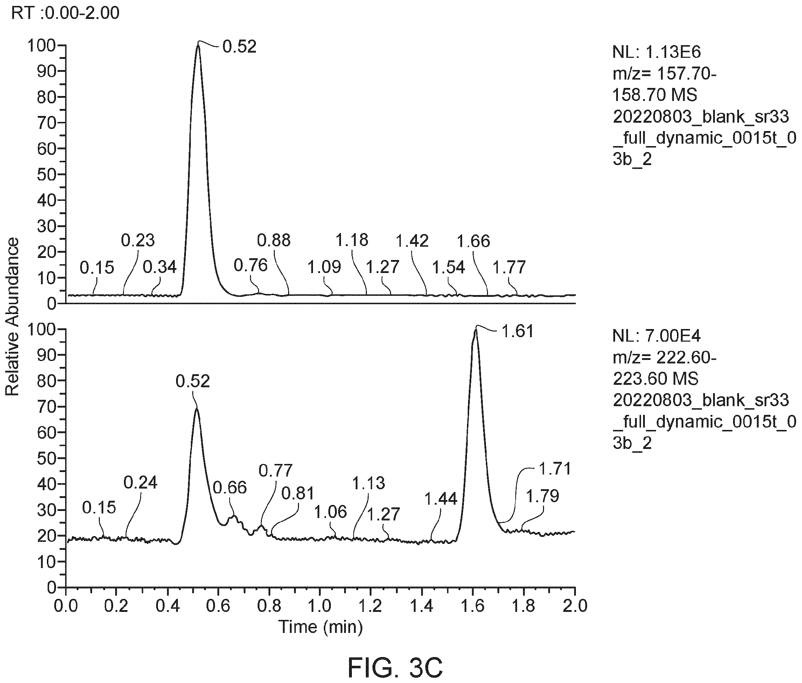

FIG. 3C shows the raw data of FIG. 3A obtained at non-uniform data sampling intervals as filtered by the chromatographic data filter in accordance with examples taught herein. The chromatographic peaks in FIG. 3C are significantly smoother than the data in FIG. 3A and exhibit reduced baseline noise. In addition, the amplitude of high frequency noise associated with individual ion events is reduced while all area associated with the detection of the ion signal is preserved. The attenuation of high frequencies from the baseline and the peak profile can improve the chromatographic signal-to-noise ratio by about a factor of 2 to 3 relative to standard data acquisition conditions.

The smoother peak profiles help make peak integration more consistent, which can improve precision and provide lower limits-of-quantitation (LOQ) in quantitative assays. Unlike traditional post-acquisition smoothing algorithms, which blur the peaks and include neighboring baseline noise, the chromatographic data filter taught herein retains the chromatographic peak shape and does not induce artificial peak tailing.

Performance and stability of the chromatography data filters as taught herein was explored by evaluating the relative standard deviation of the peak area over repeated scans. A full scan was obtained and %RSD of the peak area for n=6 scans were measured for three peaks of various intensities. As shown in Table 1, the chromatographic data filter as taught herein significantly improves standard deviation of peak area for data obtained using non-uniform data sampling intervals.

| | Peak 1 (high intensity) | Peak 2 (medium intensity) | Peak 3 (low intensity) |
|---|---|---|---|
| Raw data | 2.15 | 4.11 | 42.04 |
| Conventional filter | 2.05 | 3.08 | 7.77 |
| Present filter | 0.43 | 2.85 | 6.66 |

In some examples, application of the chromatographic data filter can improve spectral stability. Multi-dimensional filtering can be performed on profile data, which is then passed to a centroider algorithm. As a result, the centroider has a more stable signal to work with from scan to scan. The benefit is readily apparent when the system is scanned over a wide mass range, where peak heights and widths are more stable. This allows low bandwidth with fast scans. Chromatographic skew is reduced by allowing all masses associated with the elution of a component to maximize at the same time. In an SRM analysis where scan windows are typically less than 1 Dalton, the benefit to the centroider may not be significantly important. However, the low bandwidth relative to the number of scans per second can improve the reconstructed ion chromatograms in an SRM analysis.

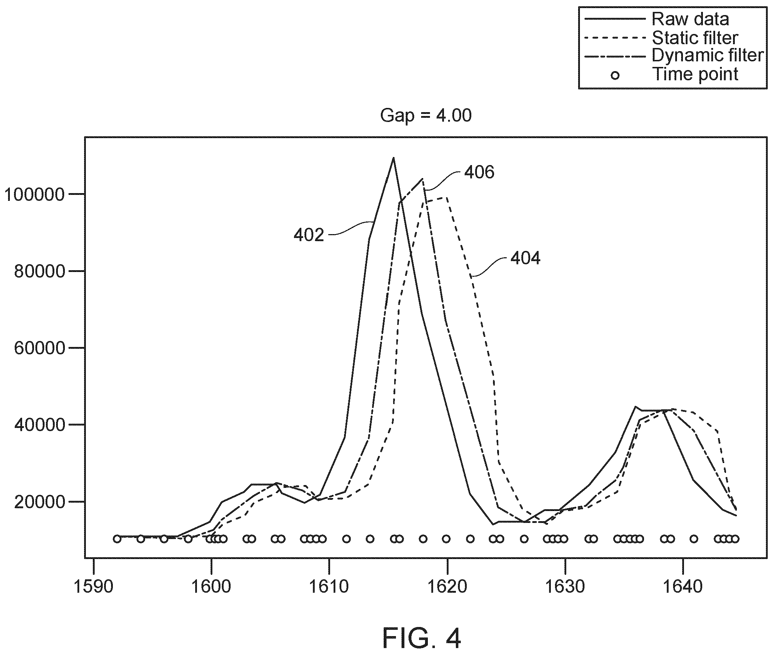

FIG. 4 illustrates a time shift between raw and filtered peaks according to some embodiments of the chromatographic data filter taught herein. The raw data peak 402 leads the uniform data filtered peak 404 (i.e., data filtered using the conventional data filter wherein the time base is equal to the static data sampling interval) and the non-uniform data filtered peak 406 (i.e., data filtered using the chromatographic data filter as taught herein that is adapted to use a time base 106 shorter than the shortest dynamic (e.g., non-uniform or varying) data sampling interval 110 in the series of scans). Because the time base 106 and adjusted bandwidth of the present data filter operate at an artificially higher sample rate than the constant time base 104 of the conventional data filter, the chromatographic data filter taught herein can utilize a new set of filter coefficients that reduces the time lag for the non-uniform data filtered peak 406 as compared to the lag for the uniform data filtered peak 404.

Due to the recursive nature of some implementations of the chromatographic data filter (such as an infinite impulse response formulation) according to some implementations, an artificial time delay can be introduced into peaks as enough data points are obtained to be able to feed back into the chromatographic data filter (e.g., the chromatographic data filter 202). In some examples, the time delay is the equivalent of approximately one or two data points. This delay can have implications for acquisition or processing algorithms that rely on precise timing or apex detection. The use of the chromatographic data filter as taught herein reduces the time lag between raw and filtered data as compared to the conventional filter. In some embodiments, the chromatographic data filter can include compensation techniques that account for the delay. For example, the chromatographic data filter can adjust the timing or incorporate predictive algorithms to align the filtered signal with the original unfiltered signal. Such compensations can reduce or minimize any adverse effects on apex detection or peak analysis.

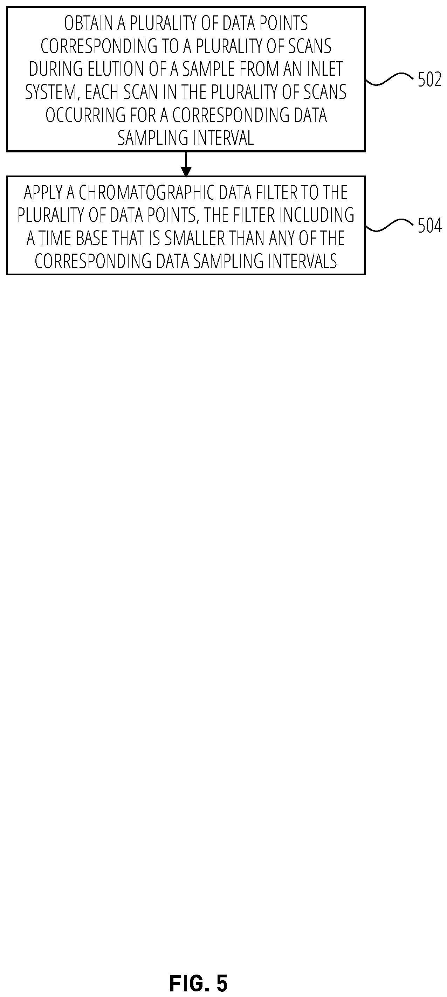

FIG. 5 illustrates an example method for processing data obtained from scans with non-uniform data sampling intervals to form a chromatogram. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes obtaining a plurality of data points corresponding to a plurality of scans during elution of a sample from an inlet system, each scan in the plurality of scans occurring for a corresponding data sampling interval at block 502.

According to some examples, the method includes applying a chromatographic data filter to the plurality of data points, the filter including a time base that is smaller than any of the corresponding data sampling intervals at block 504.

FIG. 6 illustrates an example method for processing data obtained from scans with non-uniform data sampling intervals to form a chromatogram. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes obtaining a plurality of data points corresponding to a plurality of scans during elution of a sample from an inlet system, each scan in the plurality of scans occurring for a corresponding data sampling interval at block 604.

According to some examples, the method includes measuring a data sampling interval (scan duration) for a first scan at block 606.

According to some examples, the method includes dividing the data sampling interval by an interpolation factor to determine a time base of a chromatographic data filter at block 608.

According to some examples, the method includes calculating filter coefficients of the chromatographic data filter based on the time base at block 610.

According to some examples, the method includes applying the chromatographic data filter to at least some of the plurality of data points a number of times equal to the interpolation factor at block 612.

According to some examples, the method includes combining (e.g., integrating) results of the multiple filter operations to produce an output filtered data point at block 614.

In some examples, a computer program product embodied in a non-transitory computer-readable storage medium may be provided. In such examples, the non-transitory computer-readable storage medium may store computer-readable instructions in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

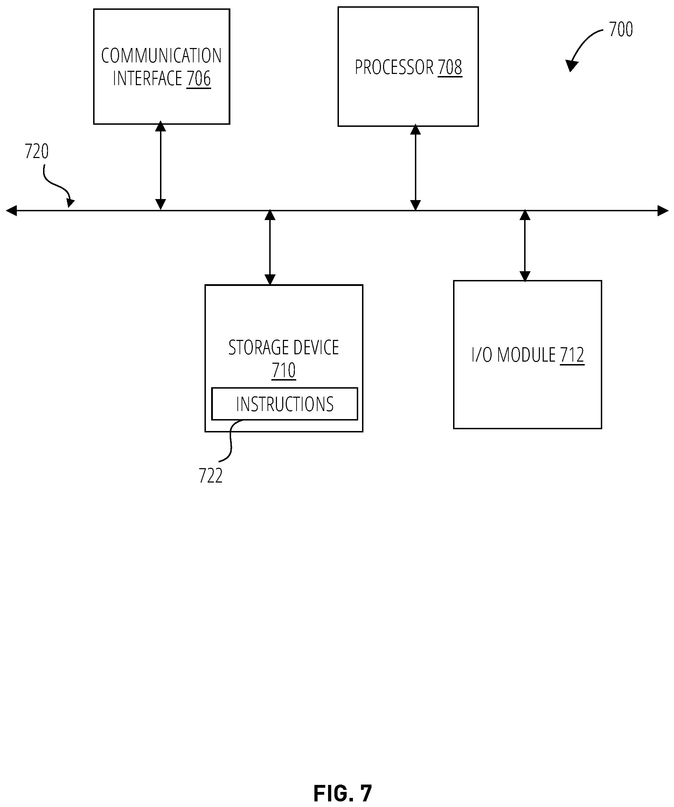

FIG. 7 shows an illustrative computing device 700 that may be specifically configured to perform one or more of the operations, methods, and processes described herein. Any of the systems, computing devices, and/or other components described herein may be implemented by computing device 700.

As shown in FIG. 7, computing device 700 may include a communication interface 706, a processor 708, a storage device 710, and an input/output ("I/O") 712 communicatively connected one to another via a communication infrastructure 720. While an illustrative computing device 700 is shown in FIG. 7, the components illustrated in FIG. 7 are not intended to be limiting. The computing device 700 can be operatively connected with, or embedded in, a mass spectrometer in some examples. Additional or alternative components may be used in other embodiments. Components of computing device 700 shown in FIG. 7 will now be described in additional detail.

Communication interface 706 may be configured to communicate with one or more computing devices. Examples of communication interface 706 include, without limitation, a wired network interface (such as a network interface card), a wireless network interface (such as a wireless network interface card), a modem, an audio/video connection, and any other suitable interface.

Processor 708 generally represents any type or form of processing unit capable of processing data and/or interpreting, executing, and/or directing execution of one or more of the instructions, processes, and/or operations described herein. Processor 708 may perform operations by executing computer-executable instructions 722 (e.g., an application, software, code, and/or other executable data instance) stored in storage device 710.

Storage device 710 may include one or more data storage media, devices, or configurations and may employ any type, form, and combination of data storage media and/or device. For example, storage device 710 may include, but is not limited to, any combination of the non-volatile media and/or volatile media described herein. Electronic data, including data described herein, may be temporarily and/or permanently stored in storage device 710. For example, data representative of computer-executable instructions 722 configured to direct processor 708 to perform any of the operations described herein may be stored within storage device 710. In some examples, data may be arranged in one or more databases residing within storage device 710.

I/O module 712 may include one or more I/O modules configured to receive user input and provide user output. One or more I/O modules may be used to receive input for a single virtual experience. I/O module 712 may include any hardware, firmware, software, or combination thereof supportive of input and output capabilities. For example, I/O module 712 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 712 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 712 is configured to provide graphical data to a display for presentation to a user. The graphical data may be representative of one or more graphical user interfaces and/or any other graphical content as may serve a particular implementation.

Advantages and features of the present disclosure can be further described by the following enumerated aspects:
Aspect 1: A method for processing data obtained from scans with non-uniform data sampling intervals to form a chromatogram, comprising: obtaining a plurality of data points corresponding to a plurality of scans during elution of a sample from an inlet system, each scan in the plurality of scans occurring for a corresponding data sampling interval; and applying a chromatographic data filter to at least some of the plurality of data points, the filter including a time base, wherein the time base is smaller than any of the corresponding data sampling intervals.
Aspect 2: The method of aspect 1, further comprising: determining a first data sampling interval in the plurality of corresponding data sampling intervals; setting the time base equal to the first data sampling interval divided by an interpolation factor; and adjusting filter parameters of the chromatographic data filter using the time base.
Aspect 3: The method of aspect 1, further comprising: determining a shortest data sampling interval in the corresponding data sampling intervals; setting the time base equal to the shortest data sampling interval divided by an interpolation factor; and adjusting filter parameters of the chromatographic data filter using the time base.
Aspect 4: The method of aspect 2 or 3, wherein the interpolation factor is five.
Aspect 5: The method of any one of aspects 1 to 4, wherein at least two of the corresponding data sampling intervals are not equal.
Aspect 6: The method of aspect 2 or 3, wherein the interpolation factor is selected to balance data quality and available computing resources.
Aspect 7: The method of any one of aspects 1 to 6, further comprising: adjusting a timing of the plurality of data points to align a filtered signal with an original unfiltered signal.
Aspect 8: The method of any one of aspects 1 to 7, further comprising: monitoring a peak shape produced from filtered data points in the plurality of data points; and adjusting a filter bandwidth of the chromatographic data filter in response to identification of changes in the peak shape.
Aspect 9: The method of any one of aspects 1 to 8, further comprising: monitoring data sampling intervals during the elution of the sample; and adjusting the time base of the chromatographic data filter such that the time base does not become larger than the data sampling intervals during the plurality of scans.
Aspect 10: A non-transitory computer-readable storage medium including instructions that, when processed by a computing device, configure the computing device to: obtain a plurality of data points corresponding to a plurality of scans during elution of a sample from an inlet system, each scan in the plurality of scans occurring for a corresponding data sampling interval; and apply a chromatographic data filter to at least some of the plurality of data points, the filter including a time base, wherein the time base is smaller than any of the corresponding data sampling intervals.
Aspect 11: A method for processing data obtained from scans with non-uniform data sampling intervals to form a chromatogram, comprising: obtaining a plurality of data points corresponding to a plurality of scans during elution of a sample from an inlet system, each scan in the plurality of scans occurring for a corresponding data sampling interval; measuring at least one corresponding data sampling interval; dividing the at least one corresponding data sampling interval by an interpolation factor to determine a time base of a chromatographic data filter; calculating filter coefficients of the chromatographic data filter based on the time base; and applying the chromatographic data filter to at least some of the plurality of data points.
Aspect 12: The method of aspect 11, wherein the at least one corresponding data sampling interval is for a first scan in the plurality of scans.
Aspect 13: The method of aspect 11, wherein the at least one corresponding data sampling interval is for a shortest scan in the plurality of scans.
Aspect 14: The method of any one of aspects 11 to 13, further comprising applying the chromatographic data filter to the data points a number of times equal to the interpolation factor.
Aspect 15: The method of aspect 14, further comprising combining the results of multiple filter applications to produce an output filtered data point.
Aspect 16: The method of any one of aspects 11 to 15, further comprising: monitoring a peak shape produced from filtered data points in the plurality of data points; and adjusting a filter bandwidth of the chromatographic data filter in response to identification of changes in the peak shape.
Aspect 17: The method of any one of aspects 11 to 16, further comprising: adjusting a timing of the plurality of data points to align a filtered signal with an original unfiltered signal.
Aspect 18: The method of any one of aspects 11 to 17, further comprising: monitoring data sampling intervals during the elution of the sample; and adjusting the time base of the chromatographic data filter such that the time base does not become larger than the data sampling intervals during the plurality of scans.
Aspect 19: A non-transitory computer-readable storage medium including instructions that, when processed by a computing device, configure the computing device to: obtain a plurality of data points corresponding to a plurality of scans during elution of a sample from an inlet system, each scan in the plurality of scans occurring for a corresponding data sampling interval; measure at least one corresponding data sampling interval; divide the at least one corresponding data sampling interval by an interpolation factor to determine a time base of a chromatographic data filter; calculate filter coefficients of the chromatographic data filter based on the time base; and apply the chromatographic data filter to at least some of the plurality of data points.
Aspect 20: The method of aspect 19, further comprising applying the chromatographic data filter to the data points a number of times equal to the interpolation factor.

In the preceding description, various exemplary embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

## Claims

1. A method for processing data obtained from scans with non-uniform data sampling intervals to form a chromatogram, comprising:
obtaining a plurality of data points corresponding to a plurality of scans during elution of a sample from an inlet system, each scan in the plurality of scans occurring for a corresponding data sampling interval; and
applying a chromatographic data filter to at least some of the plurality of data points, the filter including a time base,
wherein the time base is smaller than any of the corresponding data sampling intervals.

2. The method of claim 1, further comprising:
determining a first data sampling interval in the plurality of corresponding data sampling intervals;
setting the time base equal to the first data sampling interval divided by an interpolation factor; and
adjusting filter parameters of the chromatographic data filter using the time base.

3. The method of claim 1, further comprising:
determining a shortest data sampling interval in the corresponding data sampling intervals;
setting the time base equal to the shortest data sampling interval divided by an interpolation factor; and
adjusting filter parameters of the chromatographic data filter using the time base.

4. The method of claim 2 or 3, wherein the interpolation factor is five.

5. The method of any one of claims 1 to 4, wherein at least two of the corresponding data sampling intervals are not equal.

6. The method of any one of claims 2-3 or 5, wherein the interpolation factor is selected to balance data quality and available computing resources.

7. The method of any one of claims 1 to 6, further comprising:
adjusting a timing of the plurality of data points to align a filtered signal with an original unfiltered signal.

8. The method of any one of claims 1 to 7, further comprising:
monitoring a peak shape produced from filtered data points in the plurality of data points; and
adjusting a filter bandwidth of the chromatographic data filter in response to identification of changes in the peak shape.

9. The method of any one of claims 1 to 8, further comprising:
monitoring data sampling intervals during the elution of the sample; and
adjusting the time base of the chromatographic data filter such that the time base does not become larger than the data sampling intervals during the plurality of scans.

10. The method of any one of claims 2-4 or 6, further comprising applying the chromatographic data filter to the data points a number of times equal to the interpolation factor.

11. The method of claim 10, further comprising combining the results of multiple filter applications to produce an output filtered data point.

12. A non-transitory computer-readable storage medium including instructions that, when processed by a computing device, configure the computing device to:
obtain a plurality of data points corresponding to a plurality of scans during elution of a sample from an inlet system, each scan in the plurality of scans occurring for a corresponding data sampling interval; and
apply a chromatographic data filter to at least some of the plurality of data points, the filter including a time base,
wherein the time base is smaller than any of the corresponding data sampling intervals.
